# EUROPÄISCHE PATENTSCHRIFT

(11) **EP 1 243 824 B1**
(45) Veröffentlichungstag und Bekanntmachung des Hinweises auf die Patenterteilung: **03.12.2003**
(21) Anmeldenummer: 02006049.7
(22) Anmeldetag: 16.03.2002
(51) Int. Cl.: F16K 11/044, F16K 11/056

(54) **Hydraulisches Umschaltventil**
Hydraulic diverter valve
Soupape d'inverseur hydraulique

(30) Priorität: 23.03.2001 AT 4622001
(43) Veröffentlichungstag der Anmeldung: 25.09.2002
(73) Patentinhaber: Vaillant GmbH, 42859 Remscheid (DE)
(72) Erfinder: Peters, Bernhard, 50259 Pulheim (DE); Ruf, Andreas, 42853 Remscheid (DE); Spahn, Hans-Josef, 40699 Erkrath (DE)
(74) Vertreter: Hocker, Thomas

(56) Entgegenhaltungen:
- EP-A- 0 907 045
- EP-A- 0 907 046
- FR-A- 2 355 228
- US-A- 1 436 768
- US-A- 1 659 498

## Beschreibung

Die Erfindung bezieht sich auf ein Umschaltventil gemäß dem Oberbegriff des unabhängigen Anspruches.

Derartige Umschaltventile verfügen über einen hydraulischen Eingang und zwei hydraulische Ausgänge, zwischen denen umgeschaltet werden kann. Ein beweglicher Ventilkörper dichtet jeweils den Ausgang, der nicht durchströmt werden soll, ab. Eine bevorzugte Ausführungsform der Umschaltventile verfügt über einen elastischen, kugelförmigen Ventilkörper, der axial verschoben werden kann. An den jeweiligen Enden der Verschiebewege befinden sich Dichtflächen, an denen der Ventilkörper den jeweiligen Ausgang hydraulisch abdichtet. Der hydraulische Eingang befindet sich zwischen den beiden Ausgängen. Derartige Umschaltventile sind aus der EP-A-0 907 045 und EP-A-0 907 046 bekannt. Aus der US-A-1 436 768 ist bekannt, dass Rillen entlang der Führung bei Umschaltventilen ein Klappern und Klopfen beim Umschalten reduzieren.

Durch den statischen und dynamischen hydraulischen Druck wirken Kräfte auf den Ventilkörper. Diese Kräfte bewirken - besonders bei einseitig gelagerten Ventilkörpern - ein radiales Auslenken des Ventilkörpers. Um ein Verkanten - was einseitiges Schließen, Verschleiß und Undichtigkeit zur Folge hätte - zu vermeiden, sind Ventilkörper gemäß dem Stand der Technik in den Ventilgehäusen derartig geführt, dass zwischen Ventilkörper und Gehäuseinnenwand lediglich ein kleiner Spalt besteht. Somit wird gewährleistet, dass die Bewegung des Ventilkörpers einachsig erfolgt und die Dichtheit gewährleistet ist.

Dabei ergibt sich jedoch der Nachteil, dass die Größe des Spaltes temperaturabhängig ist, da sich der Ventilkörper mit steigender Temperatur ausdehnt und der Ventilkörper unter bestimmten Umfeldbedingungen (z.B. chemisch vorbehandeltes, heißes Heizungswasser) aufquillt. Hierdurch kommt es zu hohen Reibkräften zwischen dem Ventilkörper und der Gehäuseinnenwand. Dabei nimmt sowohl die Haftreibung als auch die Gleitreibung zu. Als Folge dessen kann unter Umständen das Ventil gar nicht mehr betätigt werden, da der Motor zur Bewegung des Ventilkörpers die Haftkraft nicht überwinden kann. Kommt es zu einer Bewegung, so kann diese sehr holprig sein, da bekanntlich die Haftreibung größer als die Gleitreibung ist und somit bei Überwindung der Haftreibung der Ventilkörper unter Spannung (aus dem Antrieb) schlagartig einen Sprung in Bewegungsrichung vornimmt (sog. Stick-Slick-Effekt). Besonders dann, wenn der Ventilkörper längere Zeit nicht bewegt wurde, haftet er besonders stark an den Berührungsstellen. Mittel- und langfristig kann es zu Materialausbrüchen kommen.

Ziel der Erfindung ist es, diese Nachteile zu vermeiden und ein Umschaltventil der eingangs erwähnten Art vorzuschlagen, die sich durch einen einfachen Aufbau und sichere Funktionsweise unter verschiedensten Umfeldbedingungen auszeichnet.

Erfindungsgemäß wird dies bei einem Umschaltventil der eingangs erwähnten Art durch die kennzeichnenden Merkmale des unabhängigen Anspruches erreicht.

Durch die vorgeschlagenen Maßnahmen reduziert sich die Kontaktfläche zwischen Ventilkörper und Gehäuse, so dass einerseits weniger Reibung entsteht und andererseits der Ventilkörper bei Erwärmung oder Aufquellen weniger gestaucht wird, da Material in die Aussparungen ausweichen kann. Gleichzeitig wird eine Rotation des Ventilkörpers begünstigt, wodurch ein einseitiger Verschleiß vermieden wird.

Durch die Merkmale des Anspruches 2 ergibt sich der Vorteil, dass durch die Ausrichtung in Abflußrichtung der Strömungswiderstand gemindert und somit die Strömung begünstigt wird.

Durch die Merkmale des Anspruches 3 ergibt sich der Vorteil, dass nur in dem Bereich, in dem Kontakt zwischen Ventilkörper und Gehäuse besteht, Aussparungen bestehen, während der Ventilkörper in den anderen Bereichen durch seine massive Form besonders stabil ist und einen geringen Strömungswiderstand aufweist.

Gemäß den Merkmalen des Anspruchs 4 wird erreicht, dass zwar der Ventilkörper sauber in dem Hohlkörper geführt werden kann, gleichzeitig jedoch wenig Kontakt besteht.

Durch die Merkmale des Anspruches 5 ergibt sich der Vorteil, dass das Spiel zwischen Ventilkörper und Hohlkörper im kalten Zustand klein und im heißen Zustand die Quetschung gering ist.

Die Merkmale des Anspruchs 6 beschreiben ein besonders günstiges Material für den Ventilkörper.

Gemäß den Merkmalen des Anspruchs 7 ergibt sich ein besonders vorteilhafter Einsatzbereich des Umschaltventils.

Die Erfindung wird nun anhand der Zeichnungen näher erläutert. Dabei zeigt
Fig. 1 eine erfindungsgemäßes Umschaltventil in Ansicht,
Fig. 2 detailliert ein Umschaltventil im Schnitt,
Fig. 3 eine Detailansicht des erfindungsgemäßen Umschaltventiles in einer Schaltstellung,
Fig. 4 eine Detailansicht des erfindungsgemäßen Umschaltventiles in der anderen Schaltstellung sowie
Fig. 5 eine Detailansicht eines erfindungsgemäßen Ventilkörpers.

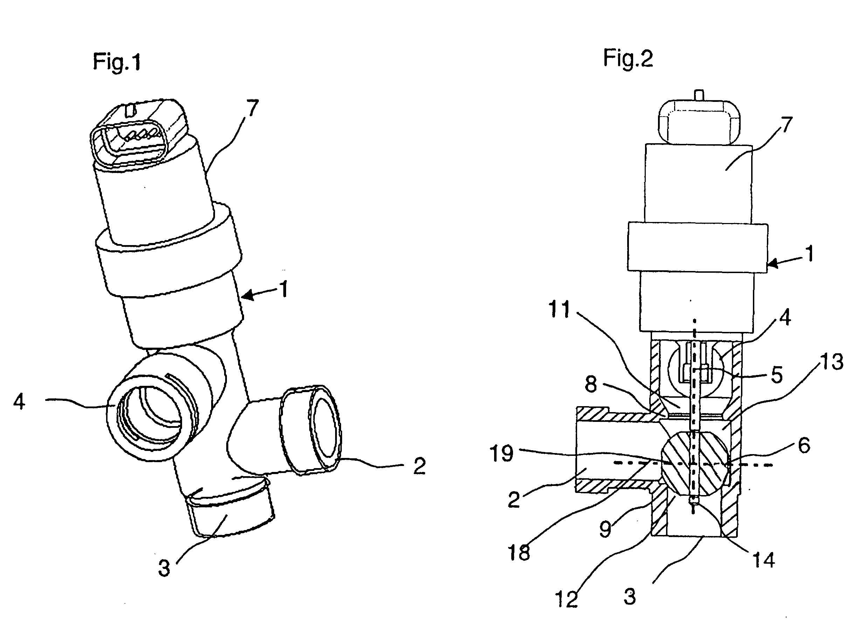

Ein Umschaltventil gemäß Fig. 1 verfügt über ein Ventilgehäuse 1, einen hydraulischen Eingang 2, zwei hydraulische Ausgänge 3 und 4 sowie einen Motor 7.

Fig. 2 zeigt die Verbindung des Motors 7 mit einer Ventilkugel 6 über einen Ventilstift 5. Am Eintritt 11 des Ausgangs 4 befindet sich eine Dichtfläche 8; äquivalent befindet sich am Eintritt 12 des Ausgangs 3 eine Dichtfläche 9. Der Eingang 2 und die beiden Ausgänge 3 und 4 münden in einen zylindrischen Hohlraum 13 im Ventilgehäuse 1. Der Umfang der Ventilkugel 6 ist etwas kleiner als der Umfang 16 des Hohlraums 13.

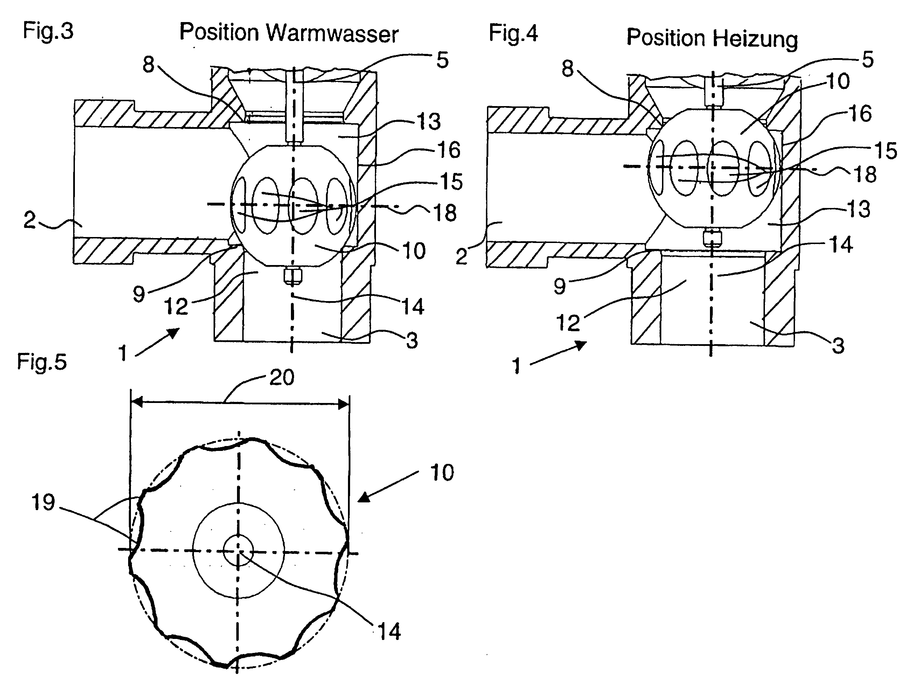

In den Fig. 3 bis 5 ist ein erfindungsgemäßer Ventilkörper 10 in verschiedenen Schaltstellungen und Perspektiven zu sehen. Der Ventilkörper 10 basiert auf einer um Aussparungen 15 reduzierten Kugel. Die Aussparungen 15 befinden sich parallel zur Drehachse 14 im Bereich des äquatorialen Umfangs der Kugel. Die Aussparungen 15 sind symmetrisch zum Äquator 18. Die sich ergebende Äquatoraußenlinie 19 ist durch gleichmäßige Verteilung der Aussparungen 15 gekennzeichnet. Der maximale Durchmesser 20 des Ventilkörpers 10 ist geringfügig geringer als der Durchmesser des Hohlraums 13.

Fig. 3 zeigt den erfindungsgemäßen Ventilkörper 10 in der Position, in der Ausgang 4 hydraulisch abgesperrt ist. Der Ventilkörper 10 dichtet über die Dichtfläche 8 den Ausgang 4 ab. Die Strömung kann von dem Eingang 2 in den Ausgang 3 gelangen.

Fig. 4 zeigt die Situation, nachdem der Ventilkörper 10 axial zum Ausgang 3 verschoben wurde, den er über die Dichtfläche 9 abdichtet, wodurch die Strömung vom Eingang 2 zum Ausgang 4 gelangt.

Fig. 5 zeigt den Ventilkörper 10 in Richtung der Drehachse 14 mit dem maximalen Durchmesser 20 und der Äquatoraußenlinie 19.

## Patentansprüche

1. Hydraulisches Umschaltventil mit einem Ventilgehäuse (1), einem Eingang (2) und vorzugsweise zwei Ausgängen (3, 4), das mittels eines Ventilkörpers (10), der axial in einem Hohlkörper (13) zwischen zwei Dichtflächen (8, 9) verschiebbar ist, und jeweils einer Dichtfläche (8, 9) am Eintritt (11, 12) der Ausgänge (3, 4) einen der Ausgänge (3, 4) hydraulisch abdichten kann, **dadurch gekennzeichnet, dass** der Ventilkörper (10) eine Kontur aufweist, die zumindest näherungsweise einem Elipsoiden, der im Bereich um die breiteste Stelle senkrecht zur Verschiebeachse (14) des Ventilkörpers (10) über den Äquatorumfang vorzugsweise in gleichmäßiger Anordnung Aussparungen (15) enthält, entspricht.

2. Hydraulisches Umschaltventil gemäß Anspruch 1, **dadurch gekennzeichnet, dass** der Elipsoid eine Kugel ist.

3. Hydraulisches Umschaltventil gemäß Anspruch 1 oder 2, **dadurch gekennzeichnet, dass** die Aussparungen (15) des Ventilkörpers (10) sich zumindest näherungsweise parallel der Verschiebeachse (14) des Ventilkörpers (10) erstrecken.

4. Hydraulisches Umschaltventil gemäß einem der Ansprüche 1 bis 3, **dadurch gekennzeichnet, dass** die Aussparungen (15) des Ventilkörpers (10) sich zumindest näherungsweise im Bereich ± 20° vom Äquator (18) befinden.

5. Hydraulisches Umschaltventil gemäß einem der Ansprüche 1 bis 4, **dadurch gekennzeichnet, dass** mindestens 70 % der Äquatoraußenlinie (19) sich in Aussparungen (15) befinden.

6. Hydraulisches Umschaltventil gemäß einem der Ansprüche 1 bis 5, **dadurch gekennzeichnet, dass** der maximale Durchmesser (20) des Ventilkörpers (10) senkrecht zur Verschiebeachse (14) bei Raumtemperatur 0,2 bis 1 mm kleiner ist als der Durchmesser des Hohlkörpers (13).

7. Hydraulisches Umschaltventil gemäß einem der Ansprüche 1 bis 6, **dadurch gekennzeichnet, dass** der Ventilkörper (10) aus beständigem ElastomerMaterial HNBR hergestellt ist.

8. Hydraulisches Umschaltventil gemäß einem der Ansprüche 1 bis 7, **dadurch gekennzeichnet, dass** das Ventil als Vorrangumschaltventil in Heizungsanlagen eingesetzt wird.

## Claims

1. A hydraulic reversing valve having a valve housing (1), an inlet port (2) and preferably two outlet ports (3, 4), which by means of a valve plug (10), which is axially displaceable in a hollow section (13) between two sealing surfaces (8, 9), can seal off one of the two outlet ports (3, 4) at a time between one of the sealing surfaces (8, 9) at the inlets (11, 12) of the outlet ports (3, 4), respectively, **characterised in that** the valve plug (10) has a contour that is at least approximately of ellipsoid shape and, in the area about its greatest width perpendicular to the axis of displacement (14) of the valve plug (10), is provided with recesses (15) in a preferably uniformly spaced array around its equatorial circumference.

2. A hydraulic reversing valve as claimed in Claim 1 **characterised in that** the ellipsoid has the shape of a ball.

3. A hydraulic reversing valve as claimed in Claim 1 or 2 **characterised in that** the recesses (15) in the valve plug (10) extend at least approximately parallel to the displacement axis (14) of the valve plug (10).

4. A hydraulic reversing valve as claimed in any of Claim1 to 3 **characterised in that** the recesses (15) in the valve plug (10) are located at least approximately in an area of ±20 degrees from the equator.

5. A hydraulic reversing valve as claimed in any of Claim1 to 4 **characterised in that** at least 70 per cent of the equatorial contour (19) are located in recesses (15).

6. A hydraulic reversing valve as claimed in any of Claim1 to 5 **characterised in that,** at room temperature, the maximum diameter (20) of the valve plug (10) in a direction perpendicular to the displacement axis (14) is between 0.2 and 1 mm smaller than the diameter of the hollow section (13).

7. A hydraulic reversing valve as claimed in any of Claim1 to 6 **characterised in that** the valve plug (10) is made of resistant elastomeric HNBR material.

8. A hydraulic reversing valve as claimed in any of Claim1 to 7 **characterised in that** the valve is used as a priority control valve in heating systems.

## Revendications

1. Valve de distribution hydraulique avec un corps (1), une entrée (2) et, de préférence, deux sorties (3, 4), laquelle, moyennant un obturateur (10) déplaçable axialement dans un creux (13) entre deux faces de contact (8, 9), et une face de contact (8, 9) respectivement à l'entrée (11, 12) des sorties (3, 4), peut boucher hydrauliquement l'une des sorties (3, 4), valve de distribution **caractérisée par le fait que** l'obturateur (10) a une forme qui ressemble au moins approximativement à un ellipsoïde qui dans la zone de la plus grande étendue perpendiculairement à l'axe de déplacement (14) de l'obturateur (10), présente des encoches (15) disposées de préférence régulièrement sur le pourtour équatorial.

2. Valve de distribution hydraulique suivant la revendication 1, **caractérisée par le fait que** l'ellipsoïde est une boule.

3. Valve de distribution hydraulique suivant la revendication 1 ou 2, **caractérisée par le fait que** les encoches (15) de l'obturateur (10) s'étendent au moins à peu près parallèlement à l'axe de déplacement (14) de l'obturateur (10).

4. Valve de distribution hydraulique suivant l'une des revendications 1 à 3, **caractérisée par le fait que** les encoches (15) de l'obturateur (10) se trouvent au moins approximativement dans l'espace ± 20° de l'équateur (18).

5. Valve de distribution hydraulique suivant l'une des revendications 1 à 4, **caractérisée par le fait qu'**au moins 70% de la ligne équatoriale (19) font partie des encoches (15).

6. Valve de distribution hydraulique suivant l'une des revendications 1 à 5, **caractérisée par le fait qu'**à la température ordinaire, le diamètre maximal (20) de l'obturateur (10) perpendiculairement à l'axe de déplacement (14) est inférieur de 0,2 à 1 mm au diamètre du creux (13).

7. Valve de distribution hydraulique suivant l'une des revendications 1 à 6, **caractérisée par le fait que** l'obturateur (10) est fait dans un matériau élastomère solide HNBR.

8. Valve de distribution hydraulique suivant l'une des revendications 1 à 7, **caractérisée par le fait que** la valve sert de distributeur dans des installations de chauffage.
